# EUROPÄISCHE PATENTSCHRIFT

(11) **EP 3 622 211 B1**
(45) Veröffentlichungstag und Bekanntmachung des Hinweises auf die Patenterteilung: **22.09.2021**
(21) Anmeldenummer: 18728017.7
(22) Anmeldetag: 09.05.2018
(51) Int. Cl.: F16L 55/179, E03F 3/06

(54) **VORRICHTUNG ZUM SANIEREN VON SCHADHAFTEN LEITUNGSWANDUNGEN MIT EINER MISCHEINRICHTUNG ZUM MISCHEN DER SANIERUNGSMASSE AM ARBEITSORT**
DEVICE FOR RENOVATING DAMAGED LINE WALLS, COMPRISING A MIXING DEVICE FOR MIXING THE RENOVATION COMPOUND AT THE WORK SITE
DISPOSITIF DE RÉFECTION DE PAROIS DE CONDUITES DÉFECTUEUSES, COMPRENANT UN MÉLANGEUR POUR MÉLANGER LE MATÉRIAU DE RÉFECTION SUR LE SITE DE TRAVAIL

(30) Priorität: 09.05.2017 DE 102017109987
(43) Veröffentlichungstag der Anmeldung: 18.03.2020
(73) Patentinhaber: Pipetronics GmbH&Co. KG, 76865 Rohrbach (DE)
(72) Erfinder: NOLL, Christian, 67117 Limburgerhof (DE)
(74) Vertreter: Dr. Langfinger & Partner
(86) Internationale Anmeldenummer: PCT/DE2018/100449
(87) Internationale Veröffentlichungsnummer: WO 2018/206056

(56) Entgegenhaltungen:
- EP-A1- 0 674 132
- EP-A2- 1 088 637
- DE-A1- 19 538 813
- DE-A1- 19 641 365
- US-A- 5 040 922

## Beschreibung

Die vorliegende Erfindung betrifft eine Vorrichtung zum Sanieren von schadhaften Leitungswandungen im Bereich des Anschlusses einer Nebenleitung an eine Hauptleitung.

Es sind Vorrichtungen für eine solche Sanierung im Stand der Technik bekannt, bei denen ein selbstfahrender oder mit Seilen im Kanal verfahrbarer Kanalsanierungsroboter eine Tragvorrichtung für verschiedene Sanierungswerkzeuge umfasst. Diese Werkzeuge, insbesondere eine Spachteleinrichtung, lassen sich nach Positionierung des Roboters im Schadstellenbereich von außerhalb des Kanals aus steuern.

Für die Reparatur von Schadstellen im Bereich des Anschlusses einer Nebenleitung an eine Hauptleitung sind zudem Vorrichtungen im Stand der Technik beschrieben, bei denen der im Hauptkanal anordnenbare Kanalsanierungsroboter eine Tragvorrichtung für eine im Bereich des Nebenkanalanschlusses an die Wandung des Hauptleitung anlegbare Abdeckung bildet.

Die Abdeckung trägt ihrerseits einen in die Nebenleitung einbringbaren, aufweitbaren Dehnkörper, auch Blase genannt. Im aufgeweiteten Zustand liegt dieser Dehnkörper gegen die Wandung der Nebenleitung an und bildet dann zusammen mit der Abdeckung eine Schalung aus, die eine in diese Schalung eingebrachte viskose Dichtmasse vor einem Aushärten derselben stützt. Nach dem Aushärten wird der Dehnkörper kontrahiert und die Abdeckung entfernt und die Dichtmasse bildet die wiederhergestellten, vorher schadhaften Kanalwandungsbereiche. Ein solche Abdeckung gemäß dem Stand der Technik, auch als Schalungsmanschette bezeichnet, ist in einer Ausführungsform grundsätzlich aus WO 1995027167A1 vorbekannt.

Grundsätzlich besteht die Möglichkeit die von den Vorrichtungen der beschriebenen Art verwendete viskose aushärtbare Dichtmasse vom Kanaläußeren aus über Schläuche oder andere bewegliche Leitungen dem Kanalsanierungsgerät zuzuführen.

Diese Lösung ist aber nicht nur aufwendig, sondern auch in vielerlei Hinsicht nachteilig. Das Nachziehen von Leitungen schränkt die Manövrierfähigkeit der Vorrichtung im Kanal erheblich ein, insbesondere da oftmals mehrere schadhafte und zu sanierende Stellen in einem Kanal auftreten und die Schadstellen auch mehr als 100 Meter vom Einbringort des Kanalsanierungsroboters entfernt liegen können. Daher müssen die Zuführleitungen für die Spachtel- oder Dichtmasse sehr lang sein.

Die zähe Sanierungsmasse durch derart lange Leitungen zu drücken bereitet erhebliche Probleme. Zähe, insbesondere tixotrope Medien bewirken einen geschwindigkeitsabhängigen Druckverlust bei jeder Bewegung in der Leitung. Die Zahlenwerte für Viskosität und Schubspannung in der Sanierungsmasse variieren stark mit der Leitungsgeometrie, der Temperatur und dem genauen Zustand der oft körnigen Anteile enthaltenden Sanierungsmasse.

Gerade bei den mit Schalungen arbeitenden Vorrichtungen ist die Einhaltung bestimmter Druckbereiche beim Verpressen der Sanierungsmasse besonders wichtig. Der Druck muss grundsätzlich mindestens so hoch sein, dass gewährleistet ist, dass die Sanierungsmasse alle schadhaften Kanalwandungsbereiche vollständig ausfüllt. Der Druck darf aber nicht so hoch sein, dass er die schadhaften und brüchigen Kanalwandbereiche zu hoch belastet.

Da der Bediener meist dutzende von Metern entfernt sitzt, ist dieser in der Regel damit überfordert, den Förderdruck für die Sanierungsmasse so einzustellen, dass diese Masse mit dem erforderlichen Druck im Bereich der Spachteleinrichtung bzw. der mit einer Abdeckung und einem Dehnkörper gebildeten Schalung ankommt.

Aus dem Stand der Technik sind daher Lösungen bekannt, um auf eine Verwendung von Leitungen zum Zuführen der Sanierungsmassen zu verzichten.

Aus DE 36 18 963 ist eine mit Abdeckung und Dehnkörper ausgestattete Kanalsanierungsvorrichtung bekannt, bei der die Sanierungsmasse um den zunächst schlaffen Dehnkörper herum angeordnet und dann zusammen mit diesem in den Nebenkanal eingefahren wird. Beim Aufweiten des Dehnkörpers drückt dieser die Sanierungsmasse radial gegen die schadhafte Kanalwand.

Dies bietet den Nachteil, dass nur Sanierungsmassen mit einer hohen Topfzeit verwendet werden können. Unter einer Topfzeit versteht man die Verarbeitbarkeitsdauer von reaktiven Materialien Es ist also die Zeit zwischen dem Anmischen einer mehrkomponentigen Substanz und dem Ende ihrer Verarbeitbarkeit, also die Zeitspanne, in der sich die Substanz noch aus dem Topf nehmen und verarbeiten lässt.

Da als Sanierungsmasse üblicherweise Zweikomponentenkleber verwendet werden, muss somit bei einer Lösung gemäß DE 36 18 963 die Zeit bis zum Aushärten mit vielen Sicherheiten festgelegt werden, damit sichergestellt ist, dass die Schalung vor Ende der Topfzeit gesetzt ist.

Daher ist im Stand der Technik alternativ bekannt geworden, die Sanierungsmasse in Kartuschen, Zylinder und mittels Pumpen entleerbaren Aufbewahrungsbehältern direkt auf dem Sanierungsroboter anzuordnen.

Problematisch hierbei ist jedoch, dass dies die notwendige Topfzeit verlängert. Beim Einsatz von Aufbewahrungsbehältern beginnt die Aushärtung der Sanierungsmasse spätestens mit dem Befüllen der derselben und somit bereits vor dem Einbringen des Sanierungsroboters in die zu sanierende Leitung.

Dabei ist zu beachten, dass das Anbringen der Schalung mehrere Arbeitsschritte umfasst. Zunächst wird das Abdeckelement in der Hauptleitung expandiert, dann der Dehnkörper durch eine Aussparung in die Nebenleitung eingeführt und ebenfalls expandiert, indem ein kleines nadelförmiges Verbindungselement in das Ventil des Dehnkörpers eingeführt werden muss. Anschließend muss ein Verschluss in der Abdeckung geöffnet werden, und dort der Auslass einer Leitung zum Transport der Sanierungsmasse in den Zwischenraum zwischen der durch die Abdeckung und den Dehnkörper gebildeten Schalung und die Bestandswände gepresst werden.

Jeder dieser Arbeitsschritte ist potentiell fehleranfällig und muss ggf. mehrfach wiederholt werden, so dass die Topfzeit mit hohen Sicherheiten für solche Bedienfehler ausgelegt werden muss. Dementsprechend lang ist die Aushärtezeit der Sanierungsmasse bis die Schalung wieder entfernt werden kann.

Es ist jedoch wünschenswert, den Zeitraum, in dem die Schalung in der Leitung verbleiben muss, zu minimieren. Dies reduziert Arbeitskosten sowie die Kosten für das Bereithalten des Kanalsanierungsroboters.

Zur Lösung dieses Problems schlägt nunmehr DE 1996 0832 A1 vor, das sein Ein- oder Zweikomponentenharz mit langer Topfzeit gewählt wird, und dieses vor Ort in einem Mischer mit einem Katalysator versetzt wird. Dabei wird der Katalysator in die Zuleitung des Harzes mit Überdruck gepumpt und dann schließlich sich eine Mischvorrichtung an, um beides zu vermengen. Vorgesehen ist dabei insbesondere, dass der Katalysator periodisch zugegeben wird. Dabei ist es bevorzugt, dass sowohl der Katalysator als auch das Harz mittels externer Zuleitungen zugeführt wird, wobei auch eine direkte Lagerung auf der Sanierungsvorrichtung denkbar ist.

Nachteilig an den bekannten Vorrichtungen ist es dabei somit, dass zwar durch den Verzicht auf externe Zuführungsleitungen der Sanierungsmasse die Probleme der richtigen Druckbeaufschlagung minimiert werden können, jedoch eine lange Aushärtezeit notwendig ist, da die mitgeführte Sanierungsmasse eine ausreichend dimensionierte Topfzeit aufweisen muss. Diese Topfzeit soll gemäß einer Lehre aus dem Stand der Technik dadurch reduziert werden, dass vor Ort ein Katalysator einem Harz mit langer Topfzeit beigemischt wird.

Diese Lösung weist dabei mehrere Nachteile auf. Zum Einen härtet die Dichtmasse auch ohne Zusatz eines Katalysators nach und nach aus. Es ist also stets zu beachten, die auf den jeweiligen Aushärtgrad passende Menge an Katalysator zuzugeben, was sich als praktisch schwierig erweist.

Des weiteren muss ein weitere Behälter vorgehalten werden, der zusätzlich zur Dichtmasse gehandhabt werden muss und der Platz einnimmt.

Auch ist es schwierig, die relativ kleine Menge an Katalysator verglichen mit der Menge an Dichtmasse selbst zu dosieren und eine homogene Vermischung sicherzustellen. EP 0674132 A1 offenbart eine Vorrichtung nach dem Oberbegriff des Anspruchs 1.

Daher lag die Aufgabe der vorliegenden Erfindung darin, die Nachteile des Standes der Technik zu überwinden und insbesondere eine Vorrichtung zu liefern, die eine schnellere und zuverlässigere Sanierung von Leitungen ermöglicht, wobei eine möglichst schnelle Aushärtung der Sanierungsmasse ermöglicht wird, die jedoch erst zu einem gewünschten Zeitpunkt startet.

Diese Aufgabe wird gelöst durch eine Vorrichtung gemäß Anspruch 1 zum Sanieren von schadhaften Leitungswandungen im Bereich des Anschlusses einer Nebenleitung an eine Hauptleitung, umfassend ein fahrbares Trägerelement, wobei auf dem Trägerelement ein Abdeckelement und ein aufweitbarer Dehnkörper angeordnet ist, und wobei der aufweitbare Dehnkörper im nicht aufgeweiteten Zustand mindestens abschnittsweise in einer oder durch eine erste Aussparung in dem Abdeckelement in der Nebenleitung positioniert oder positionierbar ist und im aufgeweiteten Zustand an der Wandung der Nebenleitung anliegt, so dass das Abdeckelement und der Dehnkörper zusammen eine Schalung ausbilden, und wobei das Abdeckelement eine zweite Aussparung aufweist, durch die mittels eines Transportmittels von einer Aufbewahrungseinrichtung eine viskose, aushärtbare Sanierungsmasse in den Raum zwischen der Schalung und der zu der Schalung benachbarten Wandungen der Haupt- und Nebenleitung einbringbar ist, dadurch gekennzeichnet, dass die Sanierungsmasse zwei Komponenten in Form eines Harzes und eines Härtes umfasst oder aus diesen besteht und durch Polyaddition, Polykondensation und/oder Polymerisation aushärtet, wobei in der Aufbewahrungseinrichtung Harz und Härter getrennt gelagert sind, und wobei eine Mischeinrichtung umfasst ist, die vor und/oder nach dem Transportmittel angeordnet ist, wobei die Mischeinrichtung ausgelegt und eingerichtet ist, um Harz und Härter in einem vorbestimmten Mischverhältnis nach Entnahme aus der Aufbewahrungseinrichtung und vor Einbringen in den Raum zwischen der Schalung und der zu der Schalung benachbarten Wandungen der Haupt- und Nebenleitung zu Mischen.

Es hat sich dabei gezeigt, dass durch die Mischung von Harz und Härter am Einsatzort der Dichtmasse die Topfzeit frei einstellbar ist und exakt zum jeweiligen Zeitpunkt bestimmt wird. Es besteht keine Unsicherheit mehr wie im Stand der Technik, wann genau ein Aushärten abgeschlossen ist. Dies verkürzt unnötige Wartezeiten basierend auf den Unischerheiten im Stand der Technik.

Des weiteren muss erfindungsgemäß kein Behälter für einen Katalysator mitgeführt werden. Es werden zwar getrennte Behälter für Harz und Härter benötigt, deren Volumen wird jedoch zum Transport der Sanierungsmasse genutzt. Bei einem Einsatz eines Katalysators wird ebenfalls ein Behälter benötigt, der jedoch meist überdimensioniert ist und somit die Menge an zu transportierenden Dichtmasse unnötig reduziert.

Zudem kann es erfindungsgemäß vorgesehen sein, ein statischer Mischer Verwendung findet. Ein solcher statischer Mischer weist gegenüber dynamischen Mischern mehrere Vorteile auf. Diese sind kostengünstig, nehmen nicht viel Raum ein und sind wartungsfrei. Zudem benötigen sie keine Energieversorgung und können direkt in die Förderleitungen integriert werden. Hier besteht ein wesentlicher weiterer Unterschied zu Lösungen gemäß dem Stand der Technik, bei denen aufgrund der geringe Menge an Katalysator auf ein getrenntes Einspritzen desselben und anschließendem dynamischen Mischer zurückgegriffen werden muss. Dies ist jedoch wie ausgeführt technisch deutlich aufwendiger und zudem wird nur schwer ein optimales Mischverhältnis erreicht welches gemäß der vorliegenden Erfindung mit einem statischen Mischer für Harz und Härter möglich ist.

Unter einem Trägerelement soll insbesondere ein Element verstanden werden, dass auf Rädern oder Ketten verfahrbar ist und über einen integrierten Antrieb verfügt. Alternativ zu einem integrierten Antrieb kann das Trägerelement auch mittels Seilen, Kabeln und dergleichen in der Leitung verfahren werden.

Unter einem Abdeckelement soll ein Element verstanden werden, welches die Innenwandung der Hauptleitung derart abdecken kann, dass zwischen dem Abdeckelement und dem dahinterliegenden Raum ein definierter Hohlraum gebildet ist, der dicht gegenüber der Sanierungsmasse ist und ein Eindringen derselben in die Hauptleitung verhindert.

Oftmals hat es sich als vorteilhaft erwiesen, dass das Abdeckelement in Form eines Hohlzylinders bereitgestellt wird, dessen Innendurchmesser veränderbar ist. So wird der Hohlzylinder mit verkleinertem Innendurchmesser in einem Transportzustand an die schadhafte Stelle mittels des Trägerelements verfahren und dann dort expandiert, so dass dieser an den Innenwandungen der Hauptleitung fest anliegt.

Unter einem Dehnkörper soll ein größenveränderbares Element verstanden werden, welches meist auf Kunststoff oder Gummi basiert und prinzipiell einem Ballon ähnelt. Des weiteren umfasst der Dehnkörper erfindungsgemäß ein Ventil, um ein expandieren mit Druckluft zu ermöglichen sowie bei einem Öffnen des Ventils ein anschließendes Kontrahieren.

Der Dehnköper wird dabei in einer ersten Aussparung in dem Abdeckelement angeordnet und expandiert in die Nebenleitung. Gemeinsam bilden das Abdeckelement und der Dehnkörper eine Schalung aus, die, zumindest ungefähr, dem Innendurchmesser der Leitungen entspricht.

Über eine zweite Aussparung in dem Abdeckelement kann nachfolgend die Sanierungsmasse in den durch die Schalung verschlossenen Hohlraum gepresst werden. Nach dem Aushärten der Sanierungsmasse wird die Schalung entfernt, in dem der Dehnkörper kontrahiert und aus der ersten Aussparung des Abdeckelements entfernt wird. Anschließend wird das Abdeckelement selbst kontrahiert, um aus der Hauptleitung entnommen werden zu können.

Der Erfindung liegt dabei die überraschende Erkenntnis zugrunde, dass die Nachteile des Stands der Technik dadurch überwunden werden können, dass eine Sanierungsmasse in Form getrennter Komponenten in der Aufbewahrungseinrichtung gelagert ist. Im Unterschied zu dem Stand der Technik kann daher eine Sanierungsmasse mit minimaler Topfzeit gewählt werden, da ein Mischen der Einzelkomponenten erst am Einsatzort erfolgt und zwar während dem Einbringen der Sanierungsmasse in den durch die Schalung gebildeten Hohlraum. Dies hat insbesondere den Vorteil, dass keine Abschätzung für Dauer des Transports der Vorrichtung zum Einsatzort in dem Leitungssystem, möglicher Fehlversuche des Benutzers bei dem Überführen der Vorrichtung und dergleichen vorgenommen werden muss, die Aufgrund der daraus resultierenden langen Topfzeit mit einer sehr langen Aushärtedauer der Sanierungsmasse einhergehen.

Mischeinrichtungen zum Mischen von Sanierungsmassen, insbesondere Zweikomponentenklebstoffen, sind im Stand der Technik bekannt, genauso wie die jeweils von dem verwendeten Klebstoff optimalen Mischverhältnisse.

Im Sinne der vorliegenden Erfindung soll der Begriff Mischeinrichtung breit verstanden werden, und soll sämtliche Einrichtungen umfassen, die einen Mischen dienen. Dabei können sowohl Einrichtungen umfasst sein, die das Mischverhältnis selbst durch integrierte Einrichtungen festlegen als auch insbesondere Einrichtungen, bei denen das Mischverhältnis durch dritte Einrichtungen bestimmt wird.

Bevorzugt kommen jedoch Mischeinrichtungen in Form von Mischdüsen zum Einsatz.

Auch kann gemäß einer Ausführungsform der Erfindung vorgesehen sein, dass die Vorrichtung eine Heizeinrichtung umfasst, die in das Abdeckelement und/oder in das Transportmittel mindestens im Bereich der zweiten Aussparung integriert ist und/oder mit dem Abdeckelement und/oder mit dem Transportmittel mindestens im Bereich der zweiten Aussparung in Wirkverbindung steht.

Durch eine erfindungsgemäße Heizeinrichtung kann dabei die Aushärtedauer der Sanierungsmasse weiter reduziert werden.

Erfindungsgemäß kann dabei die Heizeinrichtung in das Abdeckelement und/oder in das Transportmittel mindestens im Bereich der zweiten Aussparung integriert werden oder mit diesem Bereich in Wirkverbindung stehen.

Somit kann die Sanierungsmasse vorzugsweise bereits in dem Transportmittel, meist einem Schlauch, vorgeheizt werden. Dies kann vor oder nach der erfindungsgemäßen Mischdüse erfolgen, erfolgt jedoch bevorzugt nach dem Mischen der Komponenten der Sanierungsmasse.

Alternativ oder zusätzlich kann eine Heizeinrichtung auch in die Schalung integriert werden und Heizleistung während des gesamten Aushärtevorgangs zur Beschleunigung desselben bereitstellen.

Dabei kann insbesondere vorgesehen sein, dass die Heizeinrichtung in Form eines Heizschlauchs, einer Strahlungsquelle, insbesondere einer Infrarot-Heizvorrichtung und/oder einer Mikrowellenerzeugungseinrichtung, und/oder einer Elektroheizung ausgebildet ist.

Unter einer Heizeinrichtung soll prinzipiell jede Wärmeerzeugungsvorrichtung verstanden werden, deren Funktion primär in der Erzeugung von Bereitstellung von Wärmeenergie besteht. Nicht als Heizeinrichtung sind im Sinne der Erfindung dabei Vorrichtungen, die sogenannte Abwärme produzieren, wie beispielsweise Lampen, Elektromotoren und dergleichen.

Die bevorzugten Heizeinrichtungen haben sich dabei als besonders vorteilhaft für ein Aufheizen der Sanierungsmasse erwiesen.

Auch kann es erfindungsgemäß bevorzugt sein, dass die Aufbewahrungseinrichtung auf dem Trägerelement angeordnet ist.

Wie bereits ausgeführt ist es im Stand der Technik bekannt, dass die Aufbewahrungseinrichtung für die Sanierungsmasse außerhalb des Leitungssystems angeordnet ist. Die diesbezüglichen Nachteile wurden beschrieben. Es hat sich jedoch gezeigt, dass eine direkte Integration der Aufbewahrungsvorrichtung auf das Trägerelement eine besonders kompakte Bauform ermöglicht und insbesondere den Verzicht auf einen zweiten Wagen bzw. Roboter erlaubt.

Dabei kann es vorgesehen sein, dass die Sanierungsmasse aus der Aufbewahrungseinrichtung durch eine Druckbeaufschlagung im Inneren der Aufbewahrungseinrichtung und/oder durch eine Pumpeinrichtung über das Transportmittel in den Raum hinter der Schalung einbringbar ist.

Die Sanierungsmasse muss mit einem jeweils individuellen Minimaldruck in den durch die Schalung definierten Hohlraum eingepresst werden. Des weiteren darf der Druck jedoch nicht so hoch werden, dass die Schalung ihrer abdichtenden Funktion nicht mehr nachkommen kann. Um einen solchen definierten Druck einstellen zu können, haben sich Pumpeinrichtungen, wie z.B. peristaltische Pumpen oder Kolbenpumpen als besonders geeignet erwiesen. Alternativ kann es jedoch auch möglich sein, mittels einer Druckbeaufschlagung innerhalb der Aufbewahrungseinrichtung ein Fluss der Sanierungsmasse in den besagten Hohlraum zu ermöglichen.

Gemäß einer Ausführungsform der vorliegenden Erfindung kann es vorteilhaft sein, dass das Abdeckelement in einem Transportzustand einen geringeren Innendurchmesser aufweist als in einem Betriebszustand, und insbesondere in Form einer Schalungs-Manschette aufgebildet ist.

Die Ausbildung des Abdeckelement mit unterschiedlichen Innendurchmessern ist vorteilhaft und aus dem Stand der Technik bekannt. Insbesondere eine Ausbildung des Abdeckelements in Form einer Schalungsmanschette hat den Vorteil, dass sich das zylinderförmige Abdeckelement sehr gut in der Leitung transportieren lässt und im Betriebstzustand sehr sicher fixiert ist, da es sich innerhalb der Hauptleitung selbstständig ausrichtet und durch den Anpressdruck in der gewünschten Position arretieren lässt, ohne dass weitere Hilfsmittel zum Einsatz kommen müssen.

Erfindungsgemäß ist es vorgesehen, dass ein Drucklufterzeugungselement, insbesondere in Form eines Kompressor und/oder eines Druckluftbehälters, umfasst ist, um den Dehnkörper mittels Druckluft zu expandieren.

Erfindungsgemäß ist es vorgesehen, dass der Dehnkörper ein Ventil umfasst, das im Bereich der ersten Aussparung und/oder im Inneren des Abdeckelements angeordnet ist, wobei ein mindestens in einer Raumachse beweglich gelegarter Ausleger zum Führen einer Transportleitung für die Druckluft von dem Trägerelement umfasst ist, wobei die Transportleitung an der dem Drucklufterzeugungselement gegenüberliegenden Seite ein Verbindungselement umfasst, welches in Wirkverbindung mit dem Ventil des Dehnkörpers bringbar ist oder steht, um mittels des Drucklufterzeugungselements den Dehnkörper mit Druckluft zu beaufschlagen und zu expandieren.

Erfindungsgemäß ist es vorgesehen, dass das Verbindungselement ausgelegt und eingerichtet ist, um das Ventil des Dehnkörpers für ein Kontrahieren des Dehnkörpers zu betätigen.

Zum Expandieren und Kontrahieren des Dehnkörpers wird bevorzugt auf ein in den Dehnkörper integriertes Ventil zurückgegriffen. Das Ventil selbst ist dabei mittels des Verbindungselements entweder mit Druck beaufschlagbar oder Überdruck im Dehnkörper kann durch in Wirkverbindung bringen des Verbindungselements mit dem Ventil aus dem Dehnkörper abgelassen werden.

Um das Verbindungselement zu Expandieren wird erfindungsgemäß bevorzugt auf Druckluft zurückgegriffen. Die Druckluft wird dabei entweder vor Ort erzeugt oder in einem Druckluftbehälter mitgeführt. Um das Verbindungselement mit dem Ventil des Dehnkörpers zu verbinden hat es sich zudem als vorteihaft erwiesen, dass auf einen in mindestens einer Raumachse beweglichen Ausleger zurückgegriffen wird, an dessem losen Ende sich das Verbindungselement befindet. Dabei ist beoprzugt das Verbindungselement mit der Transportleitung für Druckluft verbunden, die wiederum mit dem Drucklufterzeugungselement verbunden ist.

Es kann dabei vorteilhaft sein, dass der Ausleger mittels mindestens eines Aktuators, insbesondere eines Elektromotors, in der mindestens einen Raumachse, insbesondere in zwei, bevorzugt in drei Raumachsen bewegbar ist.

Eine Bewegung des Auslegers mittels eines Aktuators, beispielsweise eines Elektromotors oder eines hydraulischen oder pneumatischen Zylinders ist besonders vorteilhaft, da der Ausleger somit in Form eines Roboterarms bereitgestellt ist, der von einem Benutzer ferngesteuert werden kann.

Hierbei kann es besonders bevorzugt sein, dass eine Kamera umfasst ist, die auf dem Trägerelement angeordnet ist, wobei die Kamera benachbart zu dem Ausleger angeordnet ist.

Gemäß dem Stand der Technik sind Kameras an einem Ausleger der sich außerhalb des eigenlichten Trägerelements erstreckt angeordnet. Es hat sich jedoch gezeigt, dass aufgrund der Sichtverhältnisse, der Verzerrung durch die außenliegende Perspektive und die Lichtverhältnisse insbesondere das relativ kleine Ventil des Dehnkörpers sowie ein Verschlusselement für die zweite Aussparung nur sehr komplex mit dem Ausleger durch einen Benutzer anfahren lassen. Eine Anordnung einer Kamera, die im Sinne der vorliegenden Erfindung auch ein System von Kameras bzw. Bildaufnahmeeinrichtungen umfassen soll, benachbart zu dem Ausleger überwindet diese Nachteile. Des weiteren kann eine erfindungsgemäße Kamera mit einer Lichtquelle in Wirkverbindung gebracht werden oder stehen, um eine verbesserte Anzeige der zu manipulierenden Objekte durch den Benutzer zu ermöglichen.

Gemäß einer Ausführungsform der vorliegendne Erfindung ist die viskose, aushärtbare Sanierungsmasse ein Expoxydharz ist.

Zweikomponentenharze haben sich als besonders vorteilhafte Dichtmassen erwiesen.

Auch kann es gemäß einer Ausführungsform der vorliegenden Erfindung vorgesehen sein, dass die zweite Aussparung mittels eines Verschlusselements verschlossen ist, wobei insbesondere das Verschlusselement mittels des Trägerelements und/oder eines weiteren Trägerelements öffnenbar und schließbar ist, wobei das weitere Trägerelement in mindestens einer, insbesondere zwei, vorzugsweise drei Raumachsen beweglich gelagert ist.

Ein solches Verschlusselement ist vorteilhaft, da somit verhindert wird, dass die noch nicht ausgehärtete Dichtmasse durch die zwar kleine, aber vorhanden zweite Aussparung ausdringt.

Schließlich kann vorgesehen sein, dass das Transportmittel mit dem Trägerelement oder dem weiteren Trägerelement verbunden ist, so dass dem Aufbewahrungsbehälter gegenüberliegende Ende des Transportmittels an oder zumindest teilweise in der zweiten Aussparung anordnenbar oder angeordnet ist, um die Sanierungsmasse in den Raum zwischen der Schalung und der zu der Schalung benachbarten Wandungen der Haupt- und Nebenleitung einzubringen.

Auch liefert die Erfindung ein Verfahren zum Sanieren von schadhaften Leitungswandungen im Bereich des Anschlusses einer Nebenleitung an eine Hauptleitung, umfassend die folgenden Schritte, insbesondere in dieser Reihenfolge:
a) Bereitstellen einer erfindungsgemäßen Vorrichtung;
b) Bewegen des Trägerelements zu dem zu sanierenden Bereich;
c) Expandieren des Abdeckelements bis zum Anliegen an die Innenwand der Hauptleitung;
d) Positionieren des Dehnkörpers durch die erste Aussparung des Abdeckelements;
e) Expandieren des Dehnkörpers;
f) Positionieren des Transportmittels an der zweiten Aussparung des Abdeckelements; und
g) Entnehmen von getrennt vorliegenden Komponenten der Sanierungsmasse, insbesondere von Harz und Härter, aus der Aufbewahrungseinrichtung und Mischen derselben in einer Mischeinrichtung vor dem Einbringen der Sanierungsmasse in den Raum zwischen der Schalung und der zu der Schalung benachbarten Wandungen der Haupt- und Nebenleitung.

Schließlich liefert die Erfindung eine Verwendung einer erfindungsgemäßen Vorrichtung für eine Sanierung von schadhaften Leitungswandungen im Bereich des Anschlusses einer Nebenleitung an eine Hauptleitung.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.

Figur 1: eine schematische Ansicht eines Ausschnitts einer erfindungsgemäßen Vorrichtung sowie eine erfindungsgemäßes Schalungssystem in einem Leitungssystem im Transportzustand im Schnitt;
Figur 2: eine schematische Ansicht eines Ausschnitts einer erfindungsgemäßen Vorrichtung sowie eine erfindungsgemäßes Schalungssystem in einem Leitungssystem im Betriebszustand im Schnitt; und

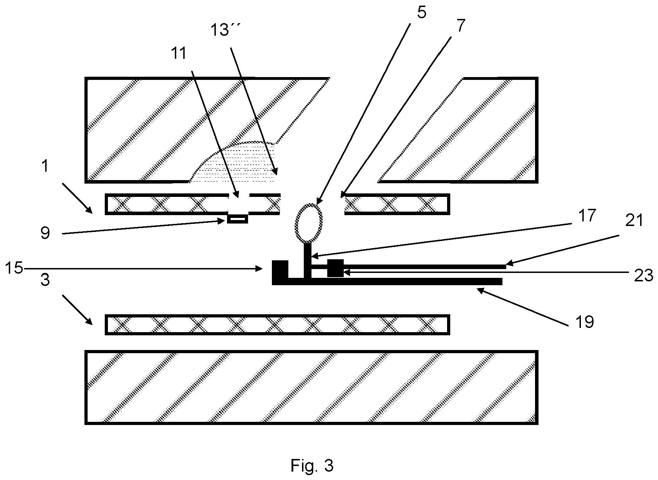

Figur 3: eine schematische Ansicht eines Ausschnitts einer erfindungsgemäßen Vorrichtung sowie eine erfindungsgemäßes Schalungssystem in einem Leitungssystem nach einer Sanierung im Schnitt.

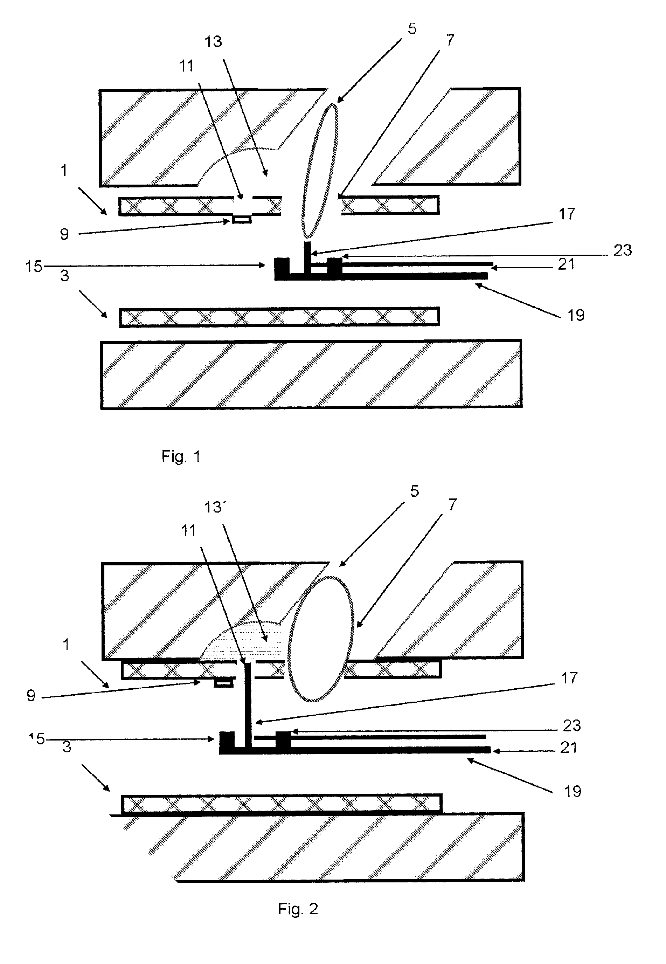

In den Figuren ist eine erfindungsgemäße Vorrichtung 1 ausschließlich teilweise dargestellt. Nicht gezeigt ist beispielsweise ein Fahrwerk und ein Aufbewahrungsbehälter für die Sanierungsmasse. In Figur 1 ist dabei ein Transportzustand einer erfindungsgemäßen Vorrichtung schematisch dargestellt. Die Vorrichtung 1 umfasst ein Abdeckelement 3 sowie einen Dehnkörper 5. Das Abdeckelement 3 ist dabei in Form einer SchalungsManschette ausgebildet und der Dehnkörper 5 in Form einer Blase. Der Dehnkörper 5 ist dabei teilweise bereits in einer ersten Aussparung 7 angeordnet. Ein Verschlusselement 9 verschließt eine zweite Aussparung 11, durch die die Sanierungsmasse in den durch den Dehnkörper 5 und das Abdeckelement 3 verschlossenen Hohlraum 13 eingebracht werden kann, um die schadhafte Stelle im Leitungssystem zu sanieren. Eine Kamera 15 und ein Ausleger 17 sind dabei an einem Tragarm 19 der ausschließlich teilweise gezeigten ersten Vorrichtung 1 angeordnet.

Wie in Figur 1 ersichtlich, ist das Abdeckelement 3 in einem Abstand zu der Innenwandung der Hauptleitung angeordnet und der Dehnkörper 5 befindet sich bereits in der ersten Aussparung 7. Somit wird ein einfacher Transport der beiden Schalungselemente zu dem zu sanierenden Abschnitt des Leitungssystems ermöglicht.

In Figur 2 ist der Betriebszustand der erfindungsgemäßen Vorrichtung dargestellt. Dabei ist das Abdeckelement 3 expandiert, so dass es fest an der Innenwandung der Hauptleitung anliegt. Gleichsam ist der expandierte Dehnkörper 5 in der Nebenleitung eng an der Innenwandung der Nebenleitung anliegend. Der somit abgeschlossene Hohlraum 13' wird durch die, durch Öffnen des Verschlusselements 9 freigelegte, zweite Aussparung 11 mittels des Auslegers 17 mit der Sanierungsmasse befüllt. Die Sanierungsmasse wird dabei mittels zwei Transporteinrichtungen 21 von dem Aufbewahrungsbehälter (nicht gezeigt) zunächst separat bis zu einer Mischeinrichtung 23 geführt und dort vor dem Einbringen in den Hohlraum 23' im vordefinierten Verhältnis gemischt. Anschließend wird das Verschlusselement 9 geschlossen und die Sanierungsmasse kann aushärten.

Zur Beschleunigung der Aushärtung kommt dabei optional eine nicht gezeigte Heizvorrichtung zum Einsatz kommen. Diese kann kann beispielsweise direkt in das Abdeckelement 3 im Bereich der zweiten Aussparung 11 angeordnet sein, oder in das Transportmittel für die Sanierungsmasse integriert sein. Auch kann es sein, dass die Heizvorrichtung mit dem Abdeckelement oder dem Transportmittel in Wirkverbindung steht und nicht direkt in diese integriert ist.

Nach erfolgter Aushärtung wird der Dehnkörper 5 kontrahiert und auch der Außendurchmesser des Abdeckelements 3 reduziert, so dass die aus diesen beiden Elementen gebildete Schalung entfernt werden kann. Die Sanierungsmasse 13" zu diesem Zeitpunkt ausgehärtet und die Sanierung der Leitung somit erfolgreich abgeschlossen.

## Patentansprüche

1. Vorrichtung (1) zum Sanieren von schadhaften Leitungswandungen im Bereich des Anschlusses einer Nebenleitung an eine Hauptleitung, umfassend ein fahrbares Trägerelement, wobei auf dem Trägerelement ein Abdeckelement (3) und ein aufweitbarer Dehnkörper (5) angeordnet ist, und wobei der aufweitbare Dehnkörper im nicht aufgeweiteten Zustand mindestens abschnittsweise in einer oder durch eine erste Aussparung (7) in dem Abdeckelement in der Nebenleitung positioniert oder positionierbar ist und im aufgeweiteten Zustand an der Wandung der Nebenleitung anliegt, so dass das Abdeckelement und der Dehnkörper zusammen eine Schalung ausbilden, und wobei das Abdeckelement eine zweite Aussparung (11) aufweist, durch die mittels eines Transportmittels von einer Aufbewahrungseinrichtung eine viskose, aushärtbare Sanierungsmasse (13") in den Raum (13) zwischen der Schalung und der zu der Schalung benachbarten Wandungen der Haupt- und Nebenleitung einbringbar ist, wobei die Sanierungsmasse zwei Komponenten in Form eines Harzes und eines Härtes umfasst oder aus diesen besteht und durch Polyaddition, Polykondensation und/oder Polymerisation aushärtet, wobei in der Aufbewahrungseinrichtung Harz und Härter getrennt gelagert sind, und wobei eine Mischeinrichtung (23) umfasst ist, die vor und/oder nach dem Transportmittel angeordnet ist, wobei die Mischeinrichtung ausgelegt und eingerichtet ist, um Harz und Härter in einem vorbestimmten Mischverhältnis nach Entnahme aus der Aufbewahrungseinrichtung und vor Einbringen in den Raum zwischen der Schalung und der zu der Schalung benachbarten Wandungen der Haupt- und Nebenleitung zu mischen, und wobei ein Drucklufterzeugungselement umfasst ist, um den Dehnkörper mittels Druckluft zu expandieren,
**dadurch gekennzeichnet, dass** der Dehnkörper ein Ventil umfasst, der im Bereich der ersten Aussparung und/oder im Inneren des Abdeckelements angeordnet ist, wobei ein mindestens in einer Raumachse beweglich gelegarter Ausleger (17) zum Führen einer Transportleitung für die Druckluft von dem Trägerelement umfasst ist, wobei die Transportleitung an der dem Drucklufterzeugungselement gegenüberliegenden Seite ein Verbindungselement umfasst, welches in Wirkverbindung mit dem Ventil des Dehnkörpers bringbar ist oder steht, um mittels des Drucklufterzeugungselements den Dehnkörper mit Druckluft zu beaufschlagen und zu expandieren, und wobei das Verbindungselement ausgelegt und eingerichtet ist, um das Ventil des Dehnkörpers für ein Kontrahieren des Dehnkörpers zu betätigen.

2. Vorrichtung nach Anspruch 1, **dadurch gekennzeichnet, dass** die Vorrichtung eine Heizeinrichtung umfasst, die in das Abdeckelement (3) und/oder in das Transportmittel mindestens im Bereich der zweiten Aussparung (11) integriert ist und/oder mit dem Abdeckelement und/oder mit dem Transportmittel mindestens im Bereich der zweiten Aussparung in Wirkverbindung steht, wobei insbesondere die Heizeinrichtung in Form eines Heizschlauchs, einer Strahlungsquelle, insbesondere einer Infrarot-Heizvorrichtung und/oder einer Mikrowellenerzeugungseinrichtung, und/oder einer Elektroheizung ausgebildet ist.

3. Vorrichtung nach Anspruch 1 oder Anspruch 2, **dadurch gekennzeichnet, dass** die Aufbewahrungseinrichtung auf dem Trägerement angeordnet ist.

4. Vorrichtung nach einem der vorangehenden Ansprüche, **dadurch gekennzeichnet, dass** die Sanierungsmasse (13") aus der Aufbewahrungseinrichtung durch eine Druckbeaufschlagung im Inneren der Aufbewahrungseinrichtung und/oder durch eine Pumpeinrichtung über das Transportmittel in den Raum hinter der Schalung einbringbar ist.

5. Vorrichtung nach einem der vorangehenden Ansprüche, **dadurch gekennzeichnet, dass** das Abdeckelement (3) in einem Transportzustand einen geringeren Innendurchmesser aufweist als in einem Betriebszustand, und insbesondere in Form einer Schalungs-Manschette aufgebildet ist.

6. Vorrichtung nach einem der vorangehenden Ansprüche, **dadurch gekennzeichnet, dass** der Ausleger (17) mittels mindestens eines Aktuators, insbesondere eines Elektromotors, in der mindestens einen Raumachse, insbesondere in zwei, bevorzugt in drei Raumachsen bewegbar ist.

7. Vorrichtung nach einem der vorangehenden Ansprüche, **dadurch gekennzeichnet, dass** eine Kamera (15) umfasst ist, die auf dem Trägerelement angeordnet ist, wobei die Kamera benachbart zu dem Ausleger (17) angeordnet ist.

8. Vorrichtung nach einem der vorangehenden Ansprüche, **dadurch gekennzeichnet, dass** die viskose, aushärtbare Sanierungsmasse (13") ein Expoxydharz ist

9. Vorrichtung nach einem der vorangehenden Ansprüche, **dadurch gekennzeichnet, dass** die zweite Aussparung (11) mittels eines Verschlusselements verschlossen ist. wobei insbesondere das Verschlusselement mittels des Trägerelements und/oder eines weiteren Trägerelements öffnenbar und schließbar ist, wobei das weitere Trägerelement in mindestens einer, insbesondere zwei, vorzugsweise drei Raumachsen beweglich gelagert ist.

10. Vorrichtung nach Anspruch 9, **dadurch gekennzeichnet, dass** das Transportmittel mit dem Trägerelement oder dem weiteren Trägerelement verbunden ist, so dass dem Aufbewahrungsbehälter gegenüberliegende Ende des Transportmittels an oder zumindest teilweise in der zweiten Aussparung (11) anordnenbar oder angeorndet ist, um die Sanierungsmasse (13") in den Raum (13) zwischen der Schalung und der zu der Schalung benachbarten Wandungen der Haupt- und Nebenleitung einzubringen.

11. Verfahren zum Sanieren von schadhaften Leitungswandungen im Bereich des Anschlusses einer Nebenleitung an einer Hauptleitung, umfassend die folgenden Schritte, insbesondere in dieser Reihenfolge:
a) Bereitstellen einer Vorrichtung (1) nach einer der vorangehenden Ansprüche;
b) Bewegen des Trägerelements zu dem zu sanierenden Bereich;
c) Expandieren des Abdeckelements (3) bis zum Anliegen an die Innenwand der Hauptleitung;
d) Positionieren des Dehnkörpers (5) durch die erste Aussparung (7) des Abdeckelements;
e) Expandieren des Dehnkörpers;
f) Positionieren des Transportmittels an der zweiten Aussparung (11) des Abdeckelements;
g) Entnehmen von getrennt vorliegenden Komponenten der Sanierungsmasse, insbesondere von Harz und Härter, aus der Aufbewahrungseinrichtung und Mischen derselben in einer Mischeinrichtung (23) vor dem Einbringen der Sanierungsmasse in den Raum (13) zwischen der Schalung und der zu der Schalung benachbarten Wandungen der Haupt- und Nebenleitung.

12. Verwendung einer Vorrichtung (1) nach einem der Ansprüche 1 bis 10 für eine Sanierung von schadhaften Leitungswandungen im Bereich des Anschlusses einer Nebenleitung an einer Hauptleitung.

## Claims

1. Apparatus (1) for rehabilitating damaged pipe walls in the region of the connection of a secondary pipe to a main pipe, comprising a mobile carrier element, wherein a covering element (3) and an expandable expansion body (5) are arranged on the carrier element, and wherein the expandable expansion body when not expanded is positioned or is positionable at least in sections in a or by means of a first recess (7) in the covering element in the secondary pipe and, when expanded, lies against the wall of the secondary pipe such that the covering element and the expansion body together form a shuttering, and wherein the covering element has a second recess (11) through which a viscous, curable rehabilitation compound (13") can be introduced by means of a transport means from a storage device into the space (13) between the shuttering and the walls of the main and secondary pipes adjacent to the shuttering, wherein the rehabilitation compound comprises two components in the form of a resin and a hardening agent or consists thereof and cures by means of polyaddition, polycondensation and/or polymerization, wherein resin and hardening agent are stored separately in the storage device, and wherein a mixing device (23) is included which is arranged upstream and/or downstream of the transport means, wherein the mixing device is designed and configured in order to mix resin and hardening agent in a predetermined mixing ratio after removal from the storage device and before introduction into the space between the shuttering and the walls of the main and secondary pipes adjacent to the shuttering, and wherein a compressed-air-generating element is included in order to expand the expansion body by means of compressed air, **characterized in that** the expansion body comprises a valve which is arranged in the region of the first recess and/or in the interior of the covering element, wherein a boom (17) which is mounted movably at least in one spatial axis is included for guiding a transport pipe for the compressed air from the carrier element, wherein the transport pipe on the side opposite the compressed-air-generating element comprises a connecting element which can be brought into or is in operative connection with the valve of the expansion body in order by means of the compressed-air-generating element to charge and to expand the expansion body with compressed air, and wherein the connecting element is designed and configured to actuate the valve of the expansion body in order to contract the expansion body.

2. Apparatus according to Claim 1, **characterized in that** the apparatus comprises a heating device which is integrated in the covering element (3) and/or in the transport means at least in the region of the second recess (11) and/or is operatively connected to the covering element and/or to the transport means at least in the region of the second recess, wherein in particular the heating device is in the form of a heating tube, a radiation source, in particular an infrared heating apparatus and/or a microwave-generating device, and/or an electric heater.

3. Apparatus according to Claim 1 or Claim 2, **characterized in that** the storage device is arranged on the carrier element.

4. Apparatus according to one of the preceding claims, **characterized in that** the rehabilitation compound (13") can be introduced from the storage device by pressurization in the interior of the storage device and/or by a pumping device via the transport means into the space behind the shuttering.

5. Apparatus according to one of the preceding claims, **characterized in that** the covering element (3) has a smaller inside diameter in a transport state than in an operating state, and in particular is in the form of a shuttering sleeve.

6. Apparatus according to one of the preceding claims, **characterized in that** the boom (17) is movable in the at least one spatial axis, in particular in two, preferably in three spatial axes, by means of at least one actuator, in particular an electric motor.

7. Apparatus according to one of the preceding claims, **characterized in that** a camera (15) is included which is arranged on the carrier element, wherein the camera is arranged adjacent to the boom (17).

8. Apparatus according to one of the preceding claims, **characterized in that** the viscous, curable rehabilitation compound (13") is an epoxy resin.

9. Apparatus according to one of the preceding claims, **characterized in that** the second recess (11) is closed by means of a closure element, wherein in particular the closure element is openable and closable by means of the carrier element and/or a further carrier element, wherein the further carrier element is mounted movably in at least one, in particular two, preferably three spatial axes.

10. Apparatus according to Claim 9, **characterized in that** the transport means is connected to the carrier element or to the further carrier element such that the end of the transport means opposite the storage container can be arranged or is arranged on or at least partially in the second recess (11) in order to introduce the rehabilitation compound (13") into the space (13) between the shuttering and the walls of the main and secondary pipes adjacent to the shuttering.

11. Method for rehabilitating damaged pipe walls in the region of the connection of a secondary pipe to a main pipe, comprising the following steps, in particular in this sequence:
a) providing an apparatus (1) according to one of the preceding claims;
b) moving the carrier element to the region to be rehabilitated;
c) expanding the covering element (3) until it lies against the inner wall of the main pipe;
d) positioning the expansion body (5) by means of the first recess (7) of the covering element;
e) expanding the expansion body;
f) positioning the transport means on the second recess (11) of the covering element;
g) removing separately present components of the rehabilitation compound, in particular resin and hardening agent, from the storage device and mixing same in a mixing device (23) before introducing the rehabilitation compound into the space (13) between the shuttering and the walls of the main and secondary pipes adjacent to the shuttering.

12. Use of an apparatus (1) according to one of Claims 1 to 10 for rehabilitating damaged pipe walls in the region of the connection of a secondary pipe to a main pipe.

## Revendications

1. Dispositif (1) de réfection de parois de conduites défectueuses dans la zone du raccordement d'une conduite secondaire à une conduite principale, comprenant un élément porteur mobile, dans lequel un élément de couverture (3) et un corps de dilatation (5) expansible sont disposés sur l'élément porteur, et dans lequel le corps de dilatation expansible, dans l'état non expansé, est ou peut être positionné au moins par sections dans ou à travers un premier orifice (7) dans l'élément de couverture dans la conduite secondaire et, dans l'état expansé, appuie contre la paroi de la conduite secondaire, de sorte que l'élément de couverture et le corps de dilatation forment ensemble un coffrage, et dans lequel l'élément de couverture présente un deuxième orifice (11) à travers lequel un matériau de réfection visqueux et durcissable (13'') peut être introduit dans l'espace (13) entre le coffrage et les parois des conduites principale et secondaire adjacentes au coffrage au moyen d'un moyen de transport depuis un dispositif de stockage, dans lequel le matériau de réfection comprend deux composants sous la forme d'une résine et d'un durcisseur ou est constitué de ceux-ci et durcit par polyaddition, polycondensation et/ou polymérisation, dans lequel la résine et le durcisseur sont conservés séparément dans le dispositif de stockage, dans lequel un mélangeur (23) est compris, lequel est disposé avant et/ou après le moyen de transport, dans lequel le mélangeur est adapté et agencé pour mélanger la résine et le durcisseur dans un rapport de mélange prédéterminé après retrait du dispositif de stockage et avant introduction dans l'espace entre le coffrage et les parois des conduites principale et secondaire adjacentes au coffrage, et dans lequel un élément générateur d'air comprimé est inclus pour gonfler le corps de dilatation au moyen d'air comprimé, **caractérisé en ce que** le corps de dilatation comprend une soupape, laquelle est disposée dans la zone du premier orifice et/ou à l'intérieur de l'élément de couverture, dans lequel une flèche (17) montée de manière mobile sur au moins un axe spatial est comprise pour guider une conduite de transport pour l'air comprimé depuis l'élément porteur, dans lequel la conduite de transport comprend, sur le côté opposé à l'élément générateur d'air comprimé, un élément de liaison qui peut être amené ou est en liaison opérante avec la valve du corps de dilatation afin de pressuriser et de gonfler le corps de dilatation avec de l'air comprimé au moyen de l'élément générateur d'air comprimé, et dans lequel l'élément de liaison est adapté et agencé pour actionner la valve du corps de dilatation afin celui-ci se contracte.

2. Dispositif selon la revendication 1, **caractérisé en ce que** le dispositif comprend un système de chauffage qui est intégré dans l'élément de couverture (3) et/ou dans le moyen de transport au moins dans la zone du deuxième orifice (11) et/ou est en liaison opérante avec l'élément de couverture et/ou avec le moyen de transport au moins dans la zone du deuxième orifice, dans lequel, en particulier, le système de chauffage se présente sous la forme d'un tuyau chauffant, d'une source de rayonnement, notamment d'un système de chauffage infrarouge et/ou d'un générateur de micro-ondes, et/ou d'un radiateur électrique.

3. Dispositif selon la revendication 1 ou la revendication 2, **caractérisé en ce que** le dispositif de stockage est disposé sur l'élément porteur.

4. Dispositif selon l'une des revendications précédentes, **caractérisé en ce que** le matériau de réfection (13") peut être introduit depuis le dispositif de stockage dans l'espace situé derrière le coffrage par pressurisation à l'intérieur du dispositif de stockage et/ou par un dispositif de pompage via le moyen de transport.

5. Dispositif selon l'une des revendications précédentes, **caractérisé en ce que** l'élément de couverture (3) présente un diamètre intérieur plus petit dans un état de transport que dans un état de fonctionnement, et est en particulier réalisé sous forme d'un manchon de coffrage.

6. Dispositif selon l'une des revendications précédentes, **caractérisé en ce que** la flèche (17) est mobile au moyen d'au moins un actionneur, notamment un moteur électrique, sur au moins un axe spatial, en particulier sur deux, de préférence sur trois axes spatiaux.

7. Dispositif selon l'une des revendications précédentes, **caractérisé en ce qu'**une caméra (15) disposée sur l'élément porteur est comprise, dans lequel la caméra est disposée à côté de la flèche (17).

8. Dispositif selon l'une des revendications précédentes, **caractérisé en ce que** le matériau de réfection visqueux et durcissable (13") est une résine polyépoxyde.

9. Dispositif selon l'une des revendications précédentes, **caractérisé en ce que** le deuxième orifice (11) est fermé au moyen d'un élément de fermeture, dans lequel, en particulier, l'élément de fermeture peut être ouvert et fermé au moyen de l'élément porteur et/ou d'un élément porteur supplémentaire, dans lequel l'élément porteur supplémentaire est monté de manière mobile sur au moins un, en particulier deux, de préférence trois axes spatiaux.

10. Dispositif selon la revendication 9, **caractérisé en ce que** le moyen de transport est relié à l'élément porteur ou à l'élément porteur supplémentaire de sorte que l'extrémité du moyen de transport opposée au conteneur de stockage est ou peut être disposée au moins partiellement dans le deuxième orifice (11) afin d'introduire le matériau de réfection (13'') dans l'espace (13) entre le coffrage et les parois des conduites principale et secondaire adjacentes au coffrage.

11. Procédé de réfection de parois de conduites défectueuses dans la zone du raccordement d'une conduite secondaire à une conduite principale, comprenant les étapes suivantes, en particulier dans cet ordre :
a) préparation d'un dispositif (1) selon l'une des revendications précédentes ;
b) déplacement de l'élément porteur vers la zone de réfection ;
c) gonflement de l'élément de couverture (3) jusqu'à ce qu'il appuie contre la paroi intérieure de la conduite principale ;
d) positionnement du corps de dilatation (5) à travers le premier orifice (7) de l'élément de couverture ;
e) gonflement du corps de dilatation ;
f) positionnement du moyen de transport sur le deuxième orifice (11) de l'élément de couverture ;
g) extraction des composants du matériau de réfection présents séparément, en particulier de la résine et du durcisseur, du dispositif de stockage et mélange de ceux-ci dans un mélangeur (23) avant que le matériau de réfection ne soit introduit dans l'espace (13) entre le coffrage et les parois des conduites principale et secondaire adjacentes au coffrage.

12. Utilisation d'un dispositif (1) selon l'une des revendications 1 à 10 pour une réfection de parois de conduites défectueuses au niveau du raccordement d'une conduite secondaire à une conduite principale.
